# EUROPEAN PATENT APPLICATION

(11) **EP 2 950 318 A1**
(43) Date of publication of application: **02.12.2015**
(21) Application number: 14001878.9
(22) Date of filing: 30.05.2014
(51) Int. Cl.: H01G 9/028, H01G 9/00, H01G 9/15

(54) **Addition of polymers to thiophene monomers in the in situ polymerization**

(71) Applicant: Heraeus Deutschland GmbH & Co. KG, 63450 Hanau (DE)
(72) Inventor: Asteman, Katrin, 51069 Köln (DE); Merker, Udo, 51105 Köln (DE); Wussow, Klaus, 57250 Netphen (DE)
(74) Representative: Herzog, Fiesser & Partner Patentanwälte PartG mbB

(57) **Abstract**

The present invention relates to a process for the production of a capacitor, comprising the process steps:
a) the provision of an electrode body (1) of an electrode material (2), wherein a dielectric (3) covers one surface (4) of this electrode material (2) at least partly to form an anode body (5);
b) bringing into contact the anode body (5) with a liquid composition comprising3,4-ethylenedioxythiophene, at least one additive and at least one solvent, wherein
- the boiling point (1013 mbar) of the at least one additive is at least 50°C higher than the boiling point (1013 mbar) of the at least one solvent, or
- wherein the at least one additive has a molecular weight of at least 200 g/mol and wherein
ii) the weight ratio additive : 3,4-ethylenedioxythiophene in the liquid composition is ≥ 0.3,
iii) the weight ratio (3,4-ethylenedioxythiophene + additive) : solvent is ≤ 1, and
iv) the liquid composition contains less than 1000 ppm, based on the weight of 3,4-ethylenedioxythiophene, of an oxidizing agent;

c) at least partial removal of the solvent;
d) bringing into contact the anode body (5) with at least one oxidizing agent;
e) *in situ* polymerization of 3,4-ethylenedioxythiophene.

The present invention also relates to the capacitor obtainable by this process, a reaction solution, an electronic circuit and the use of capacitors.

## Description

The present invention relates to a process for the production of a capacitor, the capacitor obtainable by this process, a reaction solution, an electronic circuit and the use of a capacitor.

A commercially available electrolyte capacitor as a rule is made of a porous metal electrode, an oxide layer serving as a dielectric on the metal surface, an electrically conductive material, usually a solid, which is introduced into the porous structure, an outer electrode (contacting), such as e.g. a silver layer, and further electrical contacts and an encapsulation. An electrolyte capacitor which is frequently used is the tantalum electrolyte capacitor, the anode electrode of which is made of the valve metal tantalum, on which a uniform dielectric layer of tantalum pentoxide has been generated by anodic oxidation (also called "forming"). A liquid or solid electrolyte forms the cathode of the capacitor. Aluminium capacitors in which the anode electrode is made of the valve metal aluminium, on which a uniform, electrically insulating aluminium oxide layer is generated as the dielectric by anodic oxidation, are furthermore frequently employed. Here also, a liquid electrolyte or a solid electrolyte forms the cathode of the capacitor. The aluminium capacitors are usually constructed as wound- or stack-type capacitors.

π-conjugated polymers are particularly suitable as solid electrolytes in the capacitors described above because of their high electrical conductivity. π-conjugated polymers are also called conductive polymers or synthetic metals. They are increasingly gaining economic importance, since polymers have advantages over metals with respect to processability, weight and targeted adjustment of properties by chemical modification. Examples of known π-conjugated polymers are polypyrroles, polythiophenes, polyanilines, polyacetylenes, polyphenylenes and poly(p-phenylene-vinylenes), a particularly important polythiophene used industrially being poly(3,4-ethylenedioxythiophene) (PEDOT), since it has a very high conductivity in its oxidized form.

The solid electrolytes based on conductive polymers can be applied to the oxide layer in various ways. EP-A-0 340 512 thus describes, for example, the production of a solid electrolyte from 3,4-ethylenedioxythiophene and the use thereof in electrolyte capacitors. According to the teaching of this publication, 3,4-ethylenedioxythiophene is polymerized on to the oxide layer *in situ.* In addition to the *in situ* polymerization described above, processes for the production of solid electrolytes in capacitors in which a dispersion comprising the already polymerized thiophene, for example the PEDOT/PSS dispersions known from the prior art, is applied to the oxide layer and the dispersing agent is then removed by evaporation are also known from the prior art.

However, the solid electrolyte capacitors obtained according to the teaching in EP-A-0 340 512 have the disadvantage that the electrical properties of the capacitor, such as the capacitance, the equivalent series resistance and the leakage current, are sometimes not sufficient.

The present invention was based on the object of overcoming the disadvantages resulting from the prior art in connection with capacitors, in particular in connection with solid electrolyte capacitors, very particularly preferably in connection with the aluminium capacitors known from the prior art.

In particular, the present invention was based on the object of providing a process for the production of a capacitor, by means of which capacitors which, with a low equivalent series resistance, do not only show a good capacitance, but also a low residual current.

The process for the production of the advantageous capacitors described above should moreover be distinguished in that it renders possible the production of these capacitors in the simplest possible manner, in particular with as few process steps as possible. Furthermore, the amount of monomer such as 3,4-ethylenedioxythiophene used to prepare the solid electrolyte layer should be reduced compared to the process disclosed in EP-A-0 340 512 without negatively affecting the electrical properties of the capacitor and thus allowing the manufacture of a solid electrolyte capacitor in a more cost-efficient manner.

A contribution towards achieving the abovementioned objects is made in particular by a process for the production of a capacitor, comprising the process steps:
a) the provision of an electrode body of an electrode material, wherein a dielectric covers one surface of this electrode material at least partly to form an anode body;
b) bringing into contact the anode body with a liquid composition comprising 3,4-ethylenedioxythiophene, at least one additive and at least one solvent, wherein
   - the boiling point (at 1013 mbar) of the at least one additive is at least 50°C higher than the boiling point (at 1013 mbar) of the solvent,
      or
   - wherein the at least one additive has a molecular weight of at least 200 g/mol;
   and wherein
   i) the weight ratio additive : 3,4-ethylenedioxythiophene in the liquid composition is ≥0.3,
   ii) the weight ratio (3,4-ethylenedioxythiophene + additive) : solvent is ≤ 1, and
   iii) the liquid composition contains less than 1000 ppm, based on the weight of 3,4-ethylenedioxythiophene, of an oxidizing agent;
c) at least partial removal of the solvent;
d) bringing into contact the anode body with at least one oxidizing agent;
e) *in situ* polymerization of 3,4-ethylenedioxythiophene.

In process step a), an electrode body of an electrode material, wherein a dielectric covers one surface of this electrode material at least partly to form an anode body, is first provided.

In principle, the electrode body can be produced by pressing a valve metal powder of high surface area and sintering it to give a usually porous electrode body. An electrical contact wire, preferably of a valve metal, such as e.g. tantalum, is conventionally also pressed into the electrode body here. The electrode body is then coated, for example by electrochemical oxidation, with a dielectric, i.e. an oxide layer. Alternatively, metal foils can also be etched, and coated with a dielectric by electrochemical oxidation in order to obtain an anode foil with a porous region. In a wound capacitor, an anode foil with a porous region, which forms the electrode body, and a cathode foil are separated by separators and wound up.

In the context of the invention, valve metal is to be understood as meaning those metals of which the oxide layers do not render possible current flow equally in both directions. In the case of an anodically applied voltage, the oxide layers of the valve metals block the current flow, while in the case of a cathodically applied voltage large currents occur, which may destroy the oxide layer. The valve metals include Be, Mg, Al, Ge, Si, Sn, Sb, Bi, Ti, Zr, Hf, V, Nb, Ta and W and an alloy or compound of at least one of these metals with other elements. The best known representatives of the valve metals are Al, Ta and Nb. Compounds with electrical properties comparable to a valve metal are those with metallic conductivity, which can be oxidized and of which the oxide layers have the properties described above. For example, NbO has metallic conductivity, but in general is not regarded as a valve metal. Layers of oxidized NbO have, however, the typical properties of valve metal oxide layers, so that NbO or an alloy or compound of NbO with other elements are typical examples of such compounds with electrical properties comparable to a valve metal. Electrode materials of tantalum, aluminium and those electrode materials based on niobium or niobium oxide are preferred. Aluminium is particularly preferred as the electrode material.

For production of the electrode body often with a porous region, the valve metals can be sintered, for example in powder form, to give a usually porous electrode body, or a porous structure is stamped on a metallic body. The latter can be carried out e.g. by etching a foil.

For simplicity, bodies having a porous region are also called porous in the following. Thus, for example, electrode bodies having a porous region are also called porous electrode bodies. On the one hand, the porous bodies can be permeated by a plurality of channels and therefore be sponge-like. This is often the case if tantalum is used for construction of the capacitor. Furthermore, it is possible for only the surface to have pores and for the region following under the surface pores to be solid in construction. Such a situation is often observed if aluminium is used for construction of the capacitor. Preferably, the electrode body is porous.

The often porous electrode bodies produced in this manner are then oxidized, for example, in a suitable electrolyte, such as e.g. phosphoric acid or an aqueous solution of ammonium adipate, by application of a voltage, in order to form the dielectric. The level of this forming voltage depends on the oxide layer thickness to be achieved or the later use voltage of the capacitor. Preferred forming voltages lie in a range of from 1 to 500 V, particularly preferably in a range of from 2 to 150 V, very particularly preferably in a range of from 3 to 60 V.

The as a rule porous electrode bodies employed preferably have a porosity of from 10 to 90 %, preferably from 30 to 80 %, particularly preferably from 50 to 80 % and an average pore diameter of from 10 to 10,000 nm, preferably from 20 to 5,000 nm, particularly preferably from 50 to 3,000 nm.

According to a particular embodiment of the process according to the invention, the electrolyte capacitor to be produced is an aluminium wound capacitor. In this case, in process step a) a porous aluminium foil is formed anodically as the electrode material, an aluminium oxide coating being formed as the dielectric. The aluminium foil (anode foil) obtained in this manner is then provided with a contact wire and wound up with a further porous aluminium foil (cathode foil) likewise provided with a contact wire, these two foils being spaced from one another by one or more separator papers, which are based e.g. on cellulose or, preferably, on synthetic papers. After being wound up, the anode bodies obtained in this way are fixed, for example by means of an adhesive tape. The separator paper or papers can be carbonized by heating in an oven. This manner of production of anode bodies for aluminium wound capacitors is adequately known from the prior art and is described, for example, in US 7,497,879 B2.

In process step b) the anode body is brought into contact with a liquid composition comprising 3,4-ethylenedioxythiophene, at least one additive and at least one solvent wherein
- the boiling point (at 1013 mbar) of the at least one additive is at least 50°C, preferably at least 75°C and more preferably at least 100°C higher than the boiling point (at 1013 mbar) of the at least one solvent,
   or
- wherein the at least one additive has a molecular weight of at least 200 g/mol, preferably at least 500 g/mol, more preferably at least 5000 g/mol, more preferably at least 10000 g/mol and most preferably at least 25000 g/mol;
and wherein
i) the weight ratio additive : 3,4-ethylenedioxythiophene in the liquid composition is ≥ 0.3, preferably ≥ 0.5 and more preferably ≥ 0.7,
ii) the weight ratio (3,4-ethylenedioxythiophene + additive) : solvent is ≤ 1, preferably ≤ 0.8 and more preferably ≤ 0.6 and
iii) the liquid composition contains less than 1000 ppm, preferably less than 100 ppm and more preferably less than 10 ppm, in each case based on the weight of 3,4-ethylenedioxythiophene, of an oxidizing agent, wherein it is particularly preferred, that the liquid composition is substantially free of an oxidizing agent.

If the liquid composition comprises two or more solvents, the boiling point of the additive (or - in case of a composition that comprises two or more additives - the boiling point of the additive being present in the composition in the highest amount relative to the other additives) is at least 50°C, preferably at least 75°C and more preferably at least 100°C higher than the boiling point of the solvent being present in the composition in the highest amount, relative to the other solvents.

The liquid composition is preferably a single phase system. The expression *"single phase system",* as used herein, indicates a system that consists of only a single liquid phase. Excluded are thus liquid compositions that comprise two or more separate liquid phases being in contact with each other (such as emulsions) or liquid compositions in which a solid phase is in contact with a liquid phase (such as a suspension). To obtain a single phase system when combining 3,4-ethylenedioxythiophene (which is a liquid at room temperature (20°C)), the at least one additive (which, depending on the additive, may be a liquid or a solid at room temperature) and the solvent (which is a liquid at room temperature) it is thus necessary
- that the at least one solvent and 3,4-ethylenedioxythiophene are miscible with each other in the relative weight ratio in which they are contained in the liquid composition,
- that, if the at least one additive is a solid at room temperature, this solid is soluble in the liquid mixture of the at least one solvent and 3,4-ethylenedioxythiophene (in case of liquids) or can be completely dissolved in the mixture of the other liquid components in the relative weight ratio in which the solid additive and the mixture of the at least one solvent and 3,4-ethylenedioxythiophene are contained in the liquid composition, and
- that, if the at least one additive is a liquid at room temperature, this liquid is miscible with the liquid mixture of the at least one solvent and 3,4-ethylene-dioxythiophene in the relative weight ratio in which the liquid additive and the mixture of the at least one solvent and 3,4-ethylenedioxythiophene are contained in the liquid composition.

According to a particular embodiment of the process according to the present invention the boiling point (1013 mbar) of the additive is at least 50°C, preferably at least 75°C and more preferably at least 100°C higher than the boiling point (1013 mbar) of the solvent. In this context it is also preferred that the additive has a boiling point (1013 mbar) ≥ 125°C, preferably ≥ 150°C and more preferably ≥ 175°C. It is also preferred that the additive has a solidification point (SP III) ≤ 50 °C, preferably ≤ 40 °C and still more preferably ≤ 30 °C. The solvent preferably has a boiling point (1013 mbar) < 125°C, preferably < 100°C and more preferably < 80°C. According to another particular embodiment of the process according to the present invention the additive has a molecular weight of at least 200 g/mol, preferably at least 500 g/mol, more preferably at least 5000 g/mol, more preferably at least 10000 g/mol and most preferably at least 25000 g/mol.

According to a first embodiment of the process according to the present invention, the at least one additive is an oligomeric compound of the structural formula (I) 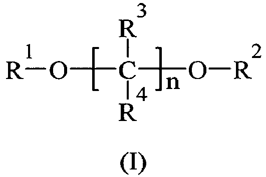 in which
- n is an integer > 1 and ≤ 10;
- the radical R¹ and R² represent a hydrogen, a C₁-C₁₀- acyl group, a C₁-C₁₀- alkyl group or a phenyl group;
- the radical R³ and R⁴ represent a hydrogen or a C₁-C₁₀- alkyl group.

In this context particularly preferred are monomeric compounds of the structural formula (I), wherein
- n is 2, 3 or 4;
- radical R¹ and R² represent a hydrogen, a methyl group, a phenyl group, a -COCH₃ group or a -COCH(CH₃)₂ group;
- radical R³ and R⁴ represent a hydrogen, a methyl group or a -CH(CH₃)₂ group.

Examples of additives that can be used in the first embodiment of the process according to the present invention include phenoxyethanol, trimethyl pentanyl diisobutyrate, propylene glycol and propylene glycol methyl ether acetate, wherein phenoxyethanol is particularly preferred. When using phenoxyethanol as the additive it is also preferred that the liquid composition comprises phenoxyethanol in a concentration in the range from 15 to 45 wt.%, preferably from 20 to 30 wt.-%, in each case based on the total weight of the liquid composition.

According to a second embodiment of the process according to the present invention, the at least one additive is a acrylic acid/styrene-copolymer or a acrylic acid ester/styrene-copolymer, preferably a styrene/butyl methacrylate-copolymer. In this context it is preferred that the styrene/butyl methacrylate-copolymer has a molecular weight in the range from 25000 to 75000 g/mol.

Examples of additives that can be used in the second embodiment of the process according to the present invention is the NeoCryl^{®} B-819 polymer soled by DSM Coating Resins. According to a third embodiment of the process according to the present invention, the at least one additive is a silicone oil. In this context it is preferred that the silicone oil is a a polysiloxane, preferably a polydimethylsiloxane or a phenyl substituted polydimethylsiloxane.

Examples of additives that can be used in the third embodiment of the process according to the present invention is the Wacker^{®} AP 200 silicone oil sold by the Wacker Chemie AG.

According to a forth embodiment of the process according to the present invention, the at least one additive is a poly(tetrahydrofuran). In this context it is preferred that the poly(tetrahydrofuran) has a molecular weight in the range from 225 to 3000 g/mol, wherein a molecular weight in the range from 625 to 675 g/mol is particularly preferred.

Examples of additives that can be used in the fourth embodiment of the process according to the present invention are the PolyTHF^{®} polymers soled by the BASF Corporation, such as PolyTHF 250, PolyTHF 650, PolyTHF 1000, PolyTHF 1800, PolyTHF 2000 and PolyTHF 2900, wherein PolyTHF 650 is particularly preferred.

The at least one solvent in the liquid composition is preferably a C₁-C₅-alcohol, wherein ethanol is particularly preferred.

The anode body is brought into contact with the liquid composition by introducing the liquid composition into the porous region of the anode body, which can, for example, be accomplished by impregnation, dipping, pouring, dripping on, spraying, misting on, knife coating, brushing or printing, for example ink-jet, screen or tampon printing. Preferably, the introduction is carried out by a procedure in which the anode body provided in process step a) is immersed in the liquid composition and is thus impregnated with the liquid composition. The immersion or the impregnation is preferably carried out for a period in a range of from 1 second to 120 minutes, particularly preferably in a range of from 10 seconds to 60 minutes and most preferably in a range of from 30 seconds to 15 minutes. The introduction of the liquid composition into the anode body can be facilitated, for example, by increased or reduced pressure, vibration, ultrasound or heat.

In process step c) at least a part of the solvent is removed. The at least partial removal of the solvent can be carried out by simple evaporation at room temperature. However, to achieve higher processing speeds it is more advantageous to at least partially remove the solvent at elevated temperatures, e.g. at temperatures of from 20 up to 300°C, preferably 40 up to 250°C. A thermal after-treatment can be combined directly with the removal of the solvent, or can be carried out at a time removed from the production of the coating. The duration of the heat treatment is 5 seconds to several hours, depending on the nature of the liquid composition used for the coating. Temperature profiles with different temperatures and dwell times can also be employed for the heat treatment. The heat treatment can be carried out e.g. by a procedure in which the coated anode bodies are moved though a heating chamber, which is at the desired temperature, at a speed such that the desired dwell time at the chosen temperature is achieved, or are brought into contact for the desired dwell time with a hot-plate which is at the desired temperature. Furthermore, the heat treatment can be carried out, for example, in a heating oven or several heating ovens each with different temperatures.

In process step d) the anode body is brought into contact with at least one oxidizing agent. Inexpensive oxidizing agents which are easy to handle, e.g. iron-III salts, such as FeCl₃, Fe(ClO₄)₃ and the iron-III salts of organic acids and of inorganic acids containing organic radicals, and furthermore H₂O₂, K₂Cr₂O₇, alkali metal and ammonium persulphates, alkali metal perborates, potassium permanganate and copper salts, such as copper tetrafluoroborate, are preferred for practical reasons. The use of persulphates and of iron-III salts of organic acids and of inorganic acids containing organic radicals has the great advantage in use that they do not have a corrosive action. Iron-III salts of inorganic acids containing organic radicals which may be mentioned are, for example, the iron-III salts of the sulphuric acid half-esters of C₁-C₂₀-alkanols, e.g. the Fe-III salt of lauryl sulphate. Iron-III salts of organic acids which may be mentioned are, for example: the Fe-III salts of C₁-C₂₀-alkylsulphonic acids, such as methane-and dodecanesulphonic acid; aliphatic C₁-C₂₀-carboxylic acids, such as 2-ethylhexylcarboxylic acid; aliphatic perfluorocarboxylic acids, such as trifluoroacetic acid and perfluorooctanoic acid; aliphatic dicarboxylic acids, such as oxalic acid, and above all of aromatic sulphonic acids optionally substituted by C₁-C₂₀-alkyl groups, such as benzenesulphonic acid, p-toluenesulphonic acid and dodecylbenzenesulphonic acid. An oxidizing agent which is very particularly preferred according to the invention is iron(III) tosylate, which is obtainable, for example, in the form of an ethanolic or butanolic solution from Heraeus Precious Metals GmbH & Co. KG under the product names Clevios™ C-B 40 V2, Clevios™ C-B 55 V2, Clevios™ C-B 40 V2 high Fe, Clevios™ C-E, Clevios™ C-E 60, Clevios™ C-E 60 high Fe, Clevios™ C-ER 31 and Clevios™ C-ER 60 (in this context, the letter "B" in the product names indicates that the product is a butanolic solution, while the letter "E" represents an ethanolic solution).

Preferably, the anode body (and thus 3,4-ethylenedioxythiophene preferably being present at the surface of the dielectric) is brought into contact with the at least one oxidizing agent by introducing the oxidizing agent in the form of a solution, for example in the form of the above mentioned ethanolic or butanolic solution from Heraeus Precious Metals, into the porous region of the anode body, which can, for example, again be accomplished by impregnation, dipping, pouring, dripping on, spraying, misting on, knife coating, brushing or printing, for example ink-jet, screen or tampon printing. Preferably, the introduction is carried out by a procedure in which the coated anode body obtained in step c) is immersed in the solution of the oxidizing agent and is thus impregnated with the solution. The immersion or the impregnation is preferably carried out for a period in a range of from 1 second to 120 minutes, particularly preferably in a range of from 10 seconds to 60 minutes and most preferably in a range of from 30 seconds to 15 minutes. The introduction of the solution of the oxidizing agent can again be facilitated, for example, by increased or reduced pressure, vibration, ultrasound or heat.

In process step e) 3,4-ethylenedioxythiophene that has been deposited at the surface of the anode body, preferably at the surface of the dielectric, is *in situ* polymerized, thereby forming a solid electrolyte layer on the surface of the anode body, preferably at the surface of the dielectric, wherein the polymerization is carried out at a temperature in a range of from 20 to 300 °C, particularly preferably in a range of from 23 °C to 250 °C over a period in a range of from 1 minute to 12 hours, particularly preferably in a range of from 15 minutes to 10 hours.

After the solid electrolyte has been deposited on the surface of the anode body, preferably on the surface of the dielectric layer, after the polymerization, the electrolyte capacitors can be finished in the manner known to the person skilled in the art. In the case of a tantalum electrolyte capacitor, the capacitor bodies can be covered, for example, with a graphite layer and a silver layer, as is known from DE-A-10 2005 043 828, while in the case of an aluminium wound capacitor, in accordance with the teaching of US 7,497,879 B2, the capacitor body is incorporated in an aluminium beaker, provided with a sealing inspection glass and firmly closed mechanically by crimping. The capacitor can then be freed from defects in the dielectric in a known manner by ageing.

A contribution towards achieving the abovementioned objects is also made by a capacitor which is obtainable by the process according to the invention.

A contribution towards achieving the abovementioned objects is also made by a liquid composition comprising 3,4-ethylenedioxythiophene monomer, at least one additive and at least one solvent, wherein
- the boiling point (at 1013 mbar) of the at least one additive is at least 50°C, preferably at least 75°C and more preferably at least 100°C higher than the boiling point (at 1013 mbar) of the at least one solvent,
   or
- wherein the at least one additive has a molecular weight of at least 200 g/mol, preferably at least 500 g/mol, more preferably at least 5000 g/mol, more preferably at least 10000 g/mol and most preferably at least 25000 g/mol;
and wherein
i) the weight ratio additive : 3,4-ethylenedioxythiophene in the liquid composition is ≥ 0.3, preferably ≥ 0.5 and more preferably ≥ 0.7,
ii) the weight ratio (3,4-ethylenedioxythiophene + additive) : solvent is ≤ 1, preferably ≤ 0.8 and more preferably ≤ 0.6 and
iii) the liquid composition contains less than 1000 ppm, preferably less than 100 ppm and more preferably less than 10 ppm, in each case based on the weight of 3,4-ethylenedioxythiophene, of an oxidizing agent, wherein it is particularly preferred, that the liquid composition is substantially free of an oxidizing agent.

Preferably, the liquid composition is a single phase system.

This liquid composition is suitable in particular for the production of an electrolyte capacitor by the process of *in situ* polymerization described in EP-A-0 340 512.

Preferred additives and solvents are in turn those compounds which have already been mentioned above as preferred additives and solvents in connection with the process according to the invention.

According to a very particularly preferred embodiment of the liquid composition according to the invention, this composition comprises
(γ1) 1 to 30 wt.%, preferably 5 to 25 wt.-% and more preferably 10 to 20 wt% of 3,4-ethylenedioxythiophene;
(γ2) 1 to 30 wt.%, preferably 2.5 to 25 wt.-% and more preferably 5 to 15 wt% additive, preferably phenoxyethanol;
(γ3) 50 to 98 wt.%, preferably 60 to 90 wt.-% and more preferably 70 to 80 wt% of a solvent, preferably ethanol or butanol.

The preparation of the composition according to the invention can be carried out by simple mixing of the components.

A contribution towards achieving the abovementioned objects is also made by the use of the capacitors obtainable by the process according to the invention in electronic circuits, for example as a filter capacitor or decoupling capacitor. Electronic circuits such as are found, for example, in computers (desktop, laptop, server), in computer peripherals (e.g. PC cards), in portable electronic equipment, such as e.g. mobile telephones, digital cameras or electronic devices for entertainment, in electronic equipment for entertainment, such as e.g. in CD/DVD players and computer games consoles, in navigation systems, in telecommunications installations, in domestic appliances, in medical technology, e.g. for defibrillators, in power supplies, such as those based on renewable energy, or in automobile electronics, such as e.g. for hybrid or electric automobiles, are preferred.

A contribution towards achieving the abovementioned objects is moreover made by such electronic circuits comprising a capacitor obtainable by the process according to the invention.

The invention is now explained in more detail with the aid of non-limiting figures and examples.

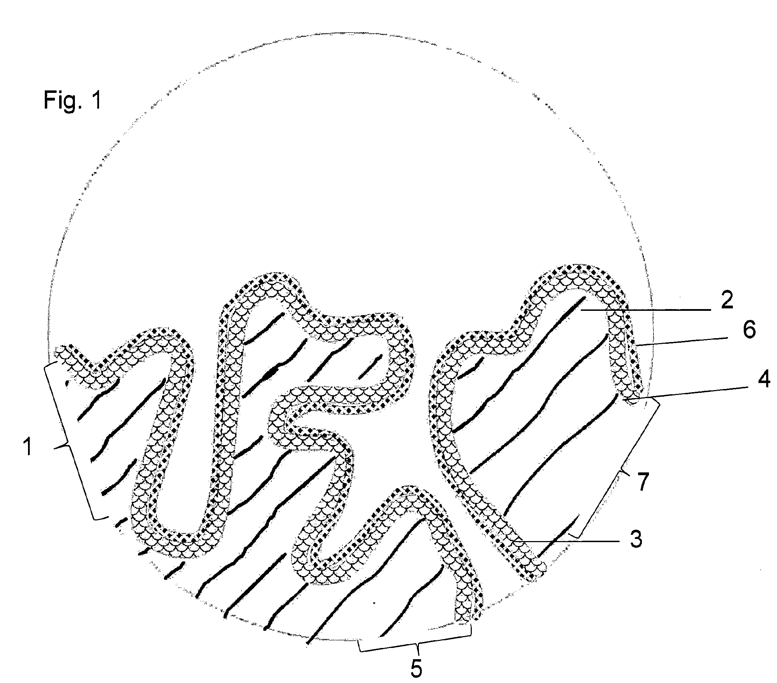

Figure 1 is a diagram of a section through a part of a capacitor according to the invention which is obtainable by a process comprising process steps a) and b). This has an electrode body 1, usually made of a porous electrode material 2, such as aluminium. On the surface 4 of the electrode material 2, a dielectric 3 is formed as a thin layer, so that an anode body 5 which is still porous and comprises the electrode body 1 of the electrode material 2 and the dielectric 3 is formed. The dielectric 3 is followed, optionally after further layers, by a layer of a solid electrolyte 6 (e.g. based on PEDOT), whereby a capacitor body 7 comprising the electrode body 1 of the electrode material 2, the dielectric 3 and the solid electrolyte 6 is formed. The layer of the solid electrolyte 6 comprises the additive.

### MEASUREMENT METHODS

### Equivalent serial resistance (ESR

The equivalent serial resistance (in mΩ) was determined with an LCR meter (Agilent 4284A) at 20°C at 100 kHz.

### Capacitance (CAP)

The capacitance (in µF) was determined with an LCR meter (Agilent 4284A) at 20°C and 120 Hz.

### Determination of the leakage current (DCL)

For the determination of the leakage current (in µA), the capacitor is provided with a series resistor of 1,000 Ω and charged a voltage of 16 V (formation voltage of the anode foil: 52V). After a settling time of 180 s, the current is measured with a Keithley 199 Multimeter.

### Mean

Unless specified otherwise here, the mean is the arithmetic mean.

### EXAMPLES

### A) Production of anode bodies

i) low voltage type
   A porous aluminium foil, formed at 36 V, having dimensions of 200 mm x 3 mm (anode foil) and a porous aluminium foil having dimensions of 210 mm x 3 mm (cathode foil) were each provided with a contact wire and were then wound up together with two cellulose separator papers and fixed with an adhesive tape. The separator paper of the oxidized electrode bodies was then carbonized in an oven at 300°C.
ii) mid voltage type
   A porous aluminium foil, formed at 52 V, having dimensions of 131 mm x 5 mm (anode foil) and a porous aluminium foil having dimensions of 145 mm x 5 mm (cathode foil) were each provided with a contact wire and were then wound up together with two cellulose separator papers and fixed with an adhesive tape. The separator paper of the oxidized electrode bodies was then carbonized in an oven at 300°C.

### B) Production of aluminium wound capacitors

### Example 1 (according to the invention)

The anode bodies (low voltage type A i)) were dipped in a solution consisting of the 7 g EDOT (Clevios™ M V2, Heraeus), 3 g of phenoxyethanol (boiling point: 242°C) and 30 g ethanol. The ethanol is partly removed in a drying step (30 min at 65°C and 30 min at 120°C).

The anode bodies with the monomer solution were dipped in oxidizing agent (Clevios™ CE 60, 60 % strength solution of Fe(III) tosylate in ethanol, Heraeus).

The polymerization takes place during the subsequent storage at 35°C for 1.5 h, 80°C for 2 h.

### Comparative Example 1 (not according to the invention)

The anode bodies (low voltage type A i)) were dipped in a solution consisting of the 10 g EDOT (Clevios™ M V2, Heraeus) and 30 g ethanol. The ethanol is partly removed in a drying step (30 min at 65°C and 30 min at 120°C).

The anode bodies with the monomer solution were dipped in oxidizing agent (Clevios™ CE 60, 60 % strength solution of Fe(III) tosylate in ethanol, Heraeus).

The polymerization takes place during the subsequent storage at 35°C for 1.5 h, 80°C for 2 h.

### Comparative Example 2 (not according to the invention)

The anode bodies (low voltage type A i)) are impregnated in a mixture comprising 2.0 g of EDOT (Clevios™ M V2, Heraeus), 0.5 g of phenoxyethanol, 7.5 g of ethanol and 25 g of oxidizing agent (Clevios™ CE 60, 60 % strength solution of Fe(III) tosylate in ethanol, Heraeus).

The polymerization takes place during the subsequent storage at room temperature for 15 min and then at 85°C for 30 min.

| | ESR [mΩ] |
|---|---|
| Example 1 | 25.0 |
| Comparative Example 1 | 35.3 |
| Comparative Example 2 | 129.4 |

### Example 2 (according to the invention)

The anode bodies (mid voltage type A ii)) were dipped in a solution consisting of the 5 g EDOT (Clevios™ M V2, Heraeus), 5 g phenoxyethanol and 30 g ethanol. The ethanol is partly removed in a drying step (30 min at 65°C and 30 min at 120°C).

The anode bodies with the monomer solution were dipped in oxidizing agent (Clevios™ CE 60, 60 % strength solution of Fe(III) tosylate in ethanol, Heraeus).

The polymerization takes place during the subsequent storage at 35°C for 1.5 h, 80°C for 2 h.

### Example 3 (according to the invention)

The anode bodies (mid voltage type A ii)) were dipped in a solution consisting of the 5 g EDOT (Clevios™ M V2, Heraeus), 5 g PolyTHF 650S (molecular weight: 650 g/mol) and 30 g ethanol. The ethanol is partly removed in a drying step (30 min at 65°C and 30 min at 120°C).

The anode bodies with the monomer solution were dipped in oxidizing agent (Clevios™ CE 60, 60 % strength solution of Fe(III) tosylate in ethanol, Heraeus).

The polymerization takes place during the subsequent storage at 35°C for 1.5 h, 80°C for 2 h.

### Example 4 (according to the invention)

The anode bodies (mid voltage type A ii)) were dipped in a solution consisting of the 5 g EDOT (Clevios™ M V2, Heraeus), 5 g Wacker silicone oil AP200 (boiling point > 200°C) and 30 g ethanol. The ethanol is partly removed in a drying step (30 min at 65°C and 30 min at 120°C).

The anode bodies with the monomer solution were dipped in oxidizing agent (Clevios™ CE 60, 60 % strength solution of Fe(III) tosylate in ethanol, Heraeus).

The polymerization takes place during the subsequent storage at 35°C for 1.5 h, 80°C for 2 h.

### Example 5 (according to the invention)

The anode bodies (mid voltage type A ii)) were dipped in a solution consisting of the 5 g EDOT (Clevios™ M V2, Heraeus), 1.5 g Neocryl B-819 (DSM) (molecular weight: 40,000 g/mol), 3.5 g Dowanol PMA (Dow chemicals; boiling point: 146°C) and 30 g ethanol. The ethanol is partly removed in a drying step (30 min at 65°C and 30 min at 120°C).

The anode bodies with the monomer solution were dipped in oxidizing agent (Clevios™ CE 60, 60 % strength solution of Fe(III) tosylate in ethanol, Heraeus).

The polymerization takes place during the subsequent storage at 35°C for 1.5 h, 80°C for 2 h.

### Example 6 (according to the invention)

The anode bodies (mid voltage type A ii)) were dipped in a solution consisting of the 5 g EDOT (Clevios™ M V2, Heraeus), 5 g Eastman TXIB (boiling point: 281°C) and 30 g ethanol. The ethanol is partly removed in a drying step (30 min at 65°C and 30 min at 120°C).

The anode bodies with the monomer solution were dipped in oxidizing agent (Clevios™ CE 60, 60 % strength solution of Fe(III) tosylate in ethanol, Heraeus).

The polymerization takes place during the subsequent storage at 35°C for 1.5 h, 80°C for 2 h.

### Example 7 (according to the invention)

The anode bodies (mid voltage type A ii)) were dipped in a solution consisting of the 5 g EDOT (Clevios™ M V2, Heraeus), 2.5 g propylene glycol (boiling point: 188.2°C), 2.5g Dowanol PMA and 30 g ethanol. The ethanol is partly removed in a drying step (30 min at 65°C and 30 min at 120°C).

The anode bodies with the monomer solution were dipped in oxidizing agent (Clevios™ CE 60, 60 % strength solution of Fe(III) tosylate in ethanol, Heraeus).

The polymerization takes place during the subsequent storage at 35°C for 1.5 h, 80°C for 2 h.

### Comparative Example 3 (not according to the invention)

The anode bodies (mid voltage type A ii)) were dipped in a solution consisting of the 10 g EDOT (Clevios™ M V2, Heraeus) and 30 g ethanol. The ethanol is partly removed in a drying step (30 min at 65°C and 30 min at 120°C).

The anode bodies with the monomer solution were dipped in oxidizing agent (Clevios™ CE 60, 60 % strength solution of Fe(III) tosylate in ethanol, Heraeus).

The polymerization takes place during the subsequent storage at 35°C for 1.5 h, 80°C for 2 h.

| | CAP [µF] | ESR [mΩ] | DCL [µA] |
|---|---|---|---|
| Example 2 | 70.3 | 17.6 | 145.7 |
| Example 3 | 69.2 | 18.3 | 477.3 |
| Example 4 | 63.8 | 18.9 | 1078.9 |
| Example 5 | 65.9 | 20.2 | 123.0 |
| Example 6 | 67.8 | 18.4 | 339.6 |
| Example 7 | 67.8 | 19.9 | 96.9 |
| Comparative Example 4 | 64.0 | 21.4 | 1345.0 |

### LIST OF REFERENCE SYMBOLS

- 1: electrode body
- 2: electrode material
- 3: dielectric
- 4: surface
- 5: anode body
- 6: solid electrolyte
- 7: capacitor body

## Claims

1. A process for the production of a capacitor, comprising the process steps:
a) the provision of an electrode body (1) of an electrode material (2), wherein a dielectric (3) covers one surface (4) of this electrode material (2) at least partly to form an anode body (5);
b) bringing into contact the anode body (5) with a liquid composition comprising 3,4-ethylenedioxythiophene, at least one additive and at least one solvent,
- wherein the boiling point (at 1013 mbar) of at least one additive is at least 50°C higher than the boiling point (at 1013 mbar) of at least one solvent or
- wherein the at least one additive has a molecular weight of at least 200 g/mol,
and wherein
i) the weight ratio additive : 3,4-ethylenedioxythiophene in the liquid composition is ≥ 0.3,
ii) the weight ratio (3,4-ethylenedioxythiophene + additive) : solvent is ≤ 1, and
iii) the liquid composition contains less than 1000 ppm, based on the weight of 3,4-ethylenedioxythiophene, of an oxidizing agent;
c) at least partial removal of the solvent;
d) bringing into contact the anode body (5) with at least one oxidizing agent;
e) *in situ* polymerization of 3,4-ethylenedioxythiophene.

2. The process according to claim 1, wherein liquid composition is a single phase system.

3. The process according to claim 1 or 2, wherein an iron(III) salt is employed as the oxidizing agent in the *in situ* polymerization.

4. The process according to one of the preceding claims, wherein at least additive is selected from the group consisting of
i) oligomeric compounds of the structural formula (I) 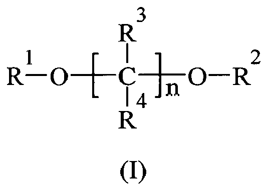 in which
- n is an integer > 1 and ≤ 10;
- the radical R¹ and R² represent a hydrogen, a C₁-C₁₀- acyl group, a C₁-C₁₀- alkyl group or a phenyl group;
- the radical R³ and R⁴ represent a hydrogen or a C₁-C₁₀- alkyl group;
ii) acrylic acid/styrene-copolymers or acrylic acid ester/styrene-copolymers;
iii) silicon oils;
and
iv) poly(tetrahydrofuran).

5. The process according to claim 4, wherein in the structural formula (I)
- n is 2, 3 or 4;
- radical R¹ and R² represent a hydrogen, a methyl group, a phenyl group, a - COCH₃ group or a -COCH(CH₃)₂ group;
- radical R³ and R⁴ represent a hydrogen, a methyl group or a -CH(CH₃)₂ group.

6. The process according to claim 5, wherein at least one additive is selected from the group consisting of phenoxyethanol, trimethyl pentanyl diisobutyrate, propylene glycol and propylene glycol methyl ether acetate.

7. The process according to claim 6, wherein at least one additive is a poly(tetrahydrofuran) with a molecular weight in the range from 250 to 3000 g/mol.

8. The process according to claim 7, wherein at least one additive is a styrene/butyl methacrylate-copolymer with a molecular weight in the range from 25000 to 75000 g/mol.

9. The process according to claim 4, wherein at least one additive is a polysiloxane.

10. The process according to one of the preceding claims, wherein at least one additive has a boiling point (at 1013 mbar) ≥ 125°C.

11. The process according to one of the preceding claims, wherein at least one solvent has a boiling point (at 1013 mbar) < 125°C.

12. The process according to one of the preceding claims, wherein at least one solvent is a C₁-C₅-alcohol.

13. The process according to claim 13, wherein at least one solvent is ethanol.

14. The process according to one of the preceding claims, wherein the liquid composition is substantially free of any oxidizing agent.

15. Capacitor obtainable by the process according to one of claims 1 to 14.

16. A liquid composition comprising 3,4-ethylenedioxythiophene monomer, at least one additive and at least one solvent, wherein
- the boiling point (at 1013 mbar) of at least one additive is at least 50°C higher than the boiling point (at 1013 mbar) of at least one solvent,
or
- wherein the at least one additive has a molecular weight of at least 200 g/mol;
and wherein
i) the weight ratio additive : 3,4-ethylenedioxythiophene in the liquid composition is ≥ 0.3,
ii) the weight ratio (3,4-ethylenedioxythiophene + additive) : solvent is ≤ 1, and
iii) the liquid composition contains less than 1000 ppm, based on the weight of 3,4-ethylenedioxythiophene, of an oxidizing agent.

17. The liquid composition according to claim 16, wherein the liquid composition is substantially free of any oxidizing agent.

18. The liquid composition according to claim 16 or 17, wherein at least one solvent is ethanol.

19. The liquid composition according to anyone of claims 16 to 18, wherein at least one additive is selected from the group consisting of phenoxyethanol, trimethyl pentanyl diisobutyrate, propylene glycol, propylene glycol methyl ether acetate, a poly(tetrahydrofuran), a styrene/butyl methacrylate-copolymer or a polysiloxane.

20. Electronic circuit, comprising a capacitor according to claim 15.

21. The use of capacitors according to claim 15 in electronic circuits.
